# DEMANDE DE BREVET EUROPEEN

(11) **EP 0 675 619 A1**
(43) Date de publication de la demande: **04.10.1995**
(21) Numéro de dépôt: 95200705.2
(22) Date de dépôt: 22.03.1995
(51) Int. Cl.: H04L 12/66

(54) **Système et équipement d'interconnexion de réseaux locaux et procédé d'obtention d'addresses**

(30) Priorité: 30.03.1994 FR 9403802
(71) Demandeur: T.R.T. TELECOMMUNICATIONS RADIOELECTRIQUES ET TELEPHONIQUES, 75013 Paris (FR); Philips Electronics N.V., 5621 BA Eindhoven (NL)
(72) Inventeur: Behaghel, Denis, F-75008 Paris (FR)
(74) Mandataire: Chaffraix, Jean

(57) **Abrégé**

L'invention concerne un système d'interconnexion de réseaux locaux (LAN1, LAN2, LAN3, LAN4, LAN5) au travers d'un réseau étendu (WAN).

Selon l'invention, ce système constitue un réseau privé utilisant un plan d'adressage privé choisi de façon à pouvoir effectuer un routage systématique des datagrammes à transmettre, sans avoir recours à une table de routage.

## Description

La présente invention concerne un système d'interconnexion de réseaux locaux au travers d'un réseau étendu auquel ils sont connectés par l'intermédiaire d'équipements d'interconnexion, les dits réseaux locaux et ledit réseau étendu étant respectivement basés sur un premier et un second protocole de couche réseau.

Un tel système d'interconnexion de réseaux locaux est décrit dans la "Request for comments: 1009" publiée par l'IETF en juin 1987 et intitulée "Requirements for Internet Gateways" (paragraphe 1.2 pages 6 à 9).

Dans ce système, deux stations A et B appartenant à un premier et à un second réseau local sont connectées à un réseau étendu par l'intermédiaire d'un premier et d'un second routeur X et Y. Lorsque la station A veut transmettre un datagramme à la station B, ce datagramme doit tout d'abord être transmis au routeur X qui détermine à partir de l'adresse de destination du datagramme et à partir de sa table de routage qu'il doit transmettre ce datagramme au routeur Y. Puis il détermine l'adresse du routeur Y dans le réseau étendu de façon à pouvoir établir une connexion vers le routeur Y.

Les contraintes économiques de réseaux étendus tels que X25 interdisent l'usage de protocoles de routage dynamique qui impliquent un dialogue important entre les différents équipements du réseau étendu. Ces tables de routage doivent donc être décrites de façon statique dans chaque équipement d'interconnexion, ce qui rend leur mise en oeuvre et leur mise à jour très complexe.

Le but de la présente invention est de proposer une méthode de routage qui remédie à ces inconvénients.

Pour cela un système d'interconnexion de réseaux locaux selon l'invention et tel que défini dans le paragraphe introductif est caractérisé en ce qu'il constitue un réseau privé qui utilise un plan d'adressage privé conforme audit premier protocole et tel que les adresses de chaque équipement d'interconnexion se déduisent directement de celles des réseaux locaux qui lui sont connectés.

L'adresse de l'équipement d'interconnexion distant dans le plan d'adressage privé se déduit donc directement sans utiliser de table de routage de l'adresse de la station de destination du datagramme.

Dans le cas particulièrement répandu où les réseaux locaux sont basés sur le protocole Internet (décrit dans l'ouvrage de A. Tanenbaum intitulé "Réseaux, Architectures, protocoles, applications" publié en 1990 aux éditions InterEditions, pages 475 à 480), des adresses Internet de classe A ou B sont attribuées à chaque équipement d'interconnexion à partir des adresses Internet de classe C des réseaux locaux qui lui sont connectés, de telle sorte que, toute adresse Internet étant composée d'un champ réseau et d'un champ station, le champ station d'une adresse d'un équipement d'interconnexion soit formé à partir du champ réseau des adresses des stations du réseau local correspondant.

Un autre but de la présente invention est de proposer un système d'interconnexion de réseaux locaux apportant une solution au problème de la pénurie d'adresses publiques Internet.

Pour cela dans un autre mode de réalisation d'un système d'interconnexion de réseaux locaux selon l'invention, au moins une adresse Internet publique de classe C est attribuée au dit réseau privé de telle sorte qu'au moins 256 de ses stations communiquent vers l'extérieur par l'intermédiaire d'une passerelle faisant partie du réseau étendu, connectée au réseau public Internet, et qui réalise les conversions d'adresses Internet "réseau privé/réseau public".

Ainsi le réseau privé est vu par le réseau public Internet comme un équipement d'interconnexion auquel est connecté, pour chaque adresse Internet publique demandée, un réseau de classe C. Un tel système présente de plus l'avantage de contrôler par l'intermédiaire de la passerelle les communications vers l'extérieur.

Un tel système peut également être mis en place indépendamment de la méthode de routage selon l'invention décrite ci-dessus.

Un autre but de la présente invention est de proposer un procédé simple pour déterminer l'adresse dans le réseau étendu d'un équipement d'interconnexion distant à partir d'une de ses adresses dans le plan d'adressage privé.

Pour cela, dans un système d'interconnexion de réseaux locaux selon l'invention, les adresses dans le plan d'adressage privé sont choisies selon une méthode prédéterminée à partir des adresses des équipements d'interconnexion sur le réseau étendu, elles-même conformes au second protocole, de telle sorte que, pour un équipement d'interconnexion, la conversion "adresse dans le plan d'adressage privé/adresse sur le réseau étendu" se fasse automatiquement.

Dans le cas particulièrement répandu où les dits premier et second protocoles sont respectivement conformes au protocole Internet et à la recommandation X121 du CCITT ladite méthode consiste à extraire un ensemble de digits de l'adresse X121 d'un équipement d'interconnexion afin de former le champ station des adresses Internet dudit équipement d'interconnexion.

Ce procédé de détermination de l'adresse, dans le réseau étendu, d'un équipement d'interconnexion distant, peut également être mis en oeuvre indépendamment de la méthode de routage selon l'invention décrite ci-dessus.

L'invention concerne également un équipement d'interconnexion destiné à être utilisé dans un système d'interconnexion de réseaux locaux selon l'invention et qui, pour cela, comporte notamment des moyens:
- pour déterminer directement, sans utiliser de tables d'adressage, à partir de l'adresse de la station de destination d'un datagramme celle de l'équipement d'interconnexion distant auquel le datagramme doit être transmis, cette adresse étant conforme au dit premier protocole,
- et qui met éventuellement en oeuvre un procédé pour déduire automatiquement l'adresse de l'équipement d'interconnexion distant dans le réseau étendu, qui est conforme au dit second protocole, à partir de son adresse dans le réseau privé, qui est conforme au dit premier protocole.

D'autres particularités, détails et avantages de la présente invention seront mis en évidence par la description qui va suivre en regard des dessins annexés qui sont donnés à titre d'exemple non limitatif et dans lesquels:
- la figure 1 est un schéma représentant un exemple de système d'interconnexion de réseaux locaux selon l'invention,
- la figure 2 représente, pour un exemple de système d'interconnexion de réseaux locaux selon l'invention, les formats d'adresses dans le plan d'adressage privé et sur le réseau étendu, ainsi que les correspondances entre ces formats,
- la figure 3 est un organigramme d'un procédé permettant de déduire automatiquement l'adresse dans le réseau étendu d'un équipement d'interconnexion distant à partir de son adresse dans le plan d'adressage privé,
- la figure 4 représente schématiquement un équipement d'interconnexion de réseaux locaux selon l'invention,
- la figure 5 représente un autre exemple de système d'interconnexion de réseaux locaux selon l'invention, dans lequel le réseau étendu comporte une passerelle de communication vers l'extérieur,
- la figure 6 représente schématiquement le réseau privé décrit à la figure 5 tel qu'il est vu par le réseau public Internet.

Dans la suite de la description, les différents réseaux locaux, dits LAN, sont basés sur le protocole Internet, dit IP, et le réseau étendu, dit WAN, est un réseau X25 dont le format d'adressage est défini par la recommandation X121 du CCITT. Toutefois d'autres types de réseaux pourraient être utilisés, tels par exemple que des réseaux de type Relais de trames ou RNIS.

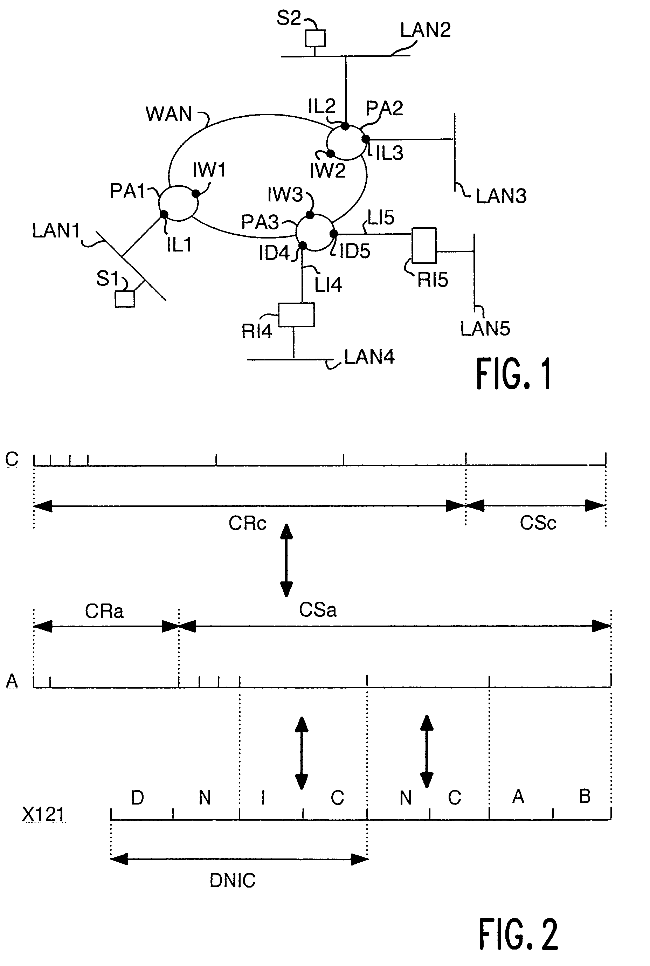

La figure 1 représente un réseau privé constitué par un système d'interconnexion de réseaux locaux selon l'invention. Ce réseau privé comporte un réseau étendu WAN, qui dans cet exemple de réalisation est un réseau X25, et des réseaux locaux LAN1, LAN2, LAN3, LAN4 et LAN5, constitués dans cet exemple par des réseaux Ethernet basés sur le protocole IP. Les réseaux locaux LAN1 d'une part, et LAN2 et LAN3 d'autre part, sont directement connectés au réseau WAN par l'intermédiaire d'un premier et d'un second équipement d'interconnexion dits points d'accès IP et notés PA1 et PA2. Et les réseaux locaux LAN4 et LAN5 sont connectés au réseau WAN par l'intermédiaire d'un troisième équipement d'interconnexion dit point d'accès IP et noté PA3, via un premier et un second routeur IP, notés RI4 et RI5, qui sont eux-même reliés au point d'accès PA3 par une première et une seconde ligne physique LI4 et LI5.

Ces équipements d'interconnexion sont constitués par un commutateur X25 disposant d'une fonction IP lui permettant de réaliser le routage selon le protocole Internet.

Les points d'accès PA1, PA2 et PA3 comportent chacun une interface réseau étendu notée respectivement IW1, IW2 et IW3. De plus le point d'accès PA1 comporte une interface réseau local notée IL1, le point d'accès PA2 comporte deux interfaces réseau local notées IL2 et IL3, et le point d'accès PA3 comporte deux interfaces notées ID4 et ID5 vers les routeurs RI4 et RI5.

Le plan d'adressage utilisé par ce réseau privé est structuré de la façon suivante: le réseau WAN est un réseau de classe A (ou éventuellement de la classe B) et les réseaux LAN qui lui sont connectés sont des réseaux de classe C.

La figure 2 donne le format des adresses Internet de classe A des points d'accès PA du réseau WAN et des adresses Internet de classe C des stations S des réseaux LAN.

D'après la figure 2, l'adresse Internet de classe C d'une station S d'un réseau LAN comporte un champ réseau CRc et un champ station CSc. Le champ réseau CRc contient la classe C de l'adresse, codée sur trois bits, et un identifiant du réseau LAN codé sur 21 bits. Et le champ station CSc contient un identifiant de la station sur le réseau LAN, codé sur 8 bits.

De même, l'adresse Internet de classe A d'un point d'accès d'un réseau étendu WAN comporte un champ réseau CRa et un champ station CSa. Le champ réseau CRa contient la classe A de l'adresse, codée sur un bit, et un identifiant du réseau WAN, codé sur sept bits. Et le champ station CSa contient un identifiant du point d'accès, codé sur 24 bits.

Conformément à l'invention, le champ station CSa de l'adresse Internet de classe A attribuée à toute interface d'un point d'accès vers un réseau local ou vers un routeur auquel est connecté un réseau local, est donné par le champ réseau CRc des stations du réseau LAN correspondant.

Ainsi, lorsque la station S1 du réseau LAN1 émet un datagramme vers la station S2 du réseau LAN2, le point d'accès PA1 le reçoit sur son interface IL1 et il détermine, à partir de l'adresse de classe C de destination du datagramme, l'adresse Internet de classe A du point d'accès distant PA2 auquel le datagramme doit être transmis. Cette adresse est formée du champ réseau du réseau WAN (qui est connu du point d'accès PA1) suivi du champ réseau de l'adresse de la station de destination.

Il est ainsi possible, par ce choix judicieux du plan d'adressage du réseau privé, d'éviter l'utilisation de tables de routage Internet dans les points d'accès du réseau WAN.

De plus, chaque point d'accès PA dispose, sur le réseau WAN X25, pour sa fonction IP, d'une adresse conforme à la recommandation X121 du CCITT. Selon l'invention, les adresses Internet de chaque point d'accès dans le réseau privé sont déterminées à partir de cette adresse X121 sur le réseau WAN.

La troisième partie de la figure 2 donne un exemple de format d'adresse X121 exprimée en BCD (Binaire Codé en Décimal). Les quatres premiers digits d'une telle adresse, appelés DNIC de l'anglais "Data Network Identification Code", représente le numéro du réseau WAN. Les cinquième et sixième digits de l'adresse X121, notés NC, permettent de coder le numéro du point d'accès. Et ses septième et huitième digits notés AB permettent de coder un numéro d'abonné sur ce point d'accès. Une valeur particulière de ces septième et huitième digits, notée AI, est réservée pour coder le numéro d'abonné attribué à la fonction IP de chaque point d'accès. Dans la suite de la description, on assimile l'adresse X121 d'un point d'accès sur le réseau WAN à l'adresse {DNIC NC AI} attribuée à sa fonction IP.

Les adresses Internet, dans le réseau privé, des différentes interfaces d'un point d'accès vers un réseau local ou vers un routeur auquel est connecté un réseau local, sont alors déterminées de la façon suivante par exemple: après traduction en binaire, les deux derniers digits IC du DNIC de l'adresse X121 du point d'accès sont utilisés pour former le premier groupe de 7 bits (bits 4 à 10) du champ station CSa; et ses cinquième et sixième digits NC sont de même utilisés pour former le second groupe de 7 bits (bits 11 à 17) du champ station CSa. Le dernier groupe de 7 bits (bits 18 à 24) du champ station CSa permet de coder les adresses Internet des différentes interfaces LAN, ou celles des routeurs auxquels sont connectés ces réseaux locaux.

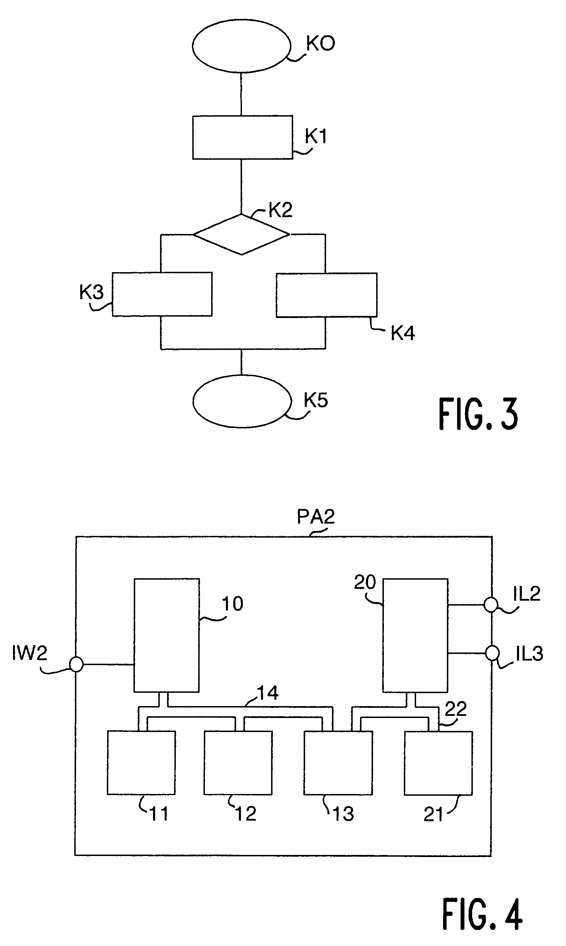

Ainsi, le point d'accès PA1, après avoir déterminé l'adresse IP de l'interface IL2 du point d'accès distant PA2, déduit automatiquement l'adresse X121 de ce point d'accès en appliquant le procédé décrit sous forme d'organigramme sur la figure 3.

La signification des différentes cases de cet organigramme est donnée ci-dessous:
- case K0: début du procédé.
- case K1: extraction du champ réseau CRc de l'adresse IP de classe C de la station de destination (ou du champ station CSa de l'adresse IP de classe A de l'interface LAN ou routeur correspondante sur le point d'accès distant), des trois groupes de 7 bits. Soient (IC)' et (NC)' les 4 digits correspondant aux deux premiers groupes de 7 bits.
- case K2: comparaison de l'adresse {DN(IC)' (NC)'} avec l'adresse {DNIC NC} du point d'accès sur lequel le procédé est exécuté. Si elles sont égales, le procédé passe à la case K4. Sinon il continue à la case K3.
- case K3: établir un circuit virtuel vers le point d'accès distant d'adresse X121 {DN(IC)' (NC)' AI}, puis passer à la case K5.
- case K4: établir, en fonction du troisième groupe de 7 bits, une connexion locale vers le réseau LAN ou le routeur concerné, puis passer à la case K5.
- case K5: fin du procédé.

Ainsi, à une adresse X121 {DNIC NC AI} d'un point d'accès PA correspond un ensemble de réseaux LAN ou de routeurs basés sur le protocole IP, et le troisième groupe de 7 bits de l'adresse IP du point d'accès distant permet d'adresser ces différents réseaux LAN, ou les routeurs connectés à ce point d'accès.

La figure 4 représente le point d'accès PA2. L'interface réseau étendu IW2 du point d'accès PA2 est reliée à un microprocesseur 10 qui est par exemple un 68302 de Motorola. Ce microprocesseur 10 est lui-même relié par un bus 14 à une mémoire 11, dite mémoire de configuration de l'équipement, à une mémoire statique 12 qui contient les instructions de fonctionnement du microprocesseur 10, notamment celles nécessaires à la mise en oeuvre de l'invention, et à une mémoire vive 13 contenant des données. Les interfaces réseau local IL2 et IL3 du point d'accès PA2 sont reliées à un processeur de communication 20 formé par exemple (pour des réseaux locaux Ethernet) à partir d'un transmetteur Intel 82503 et d'un processeur Intel 82596DX. Ce processeur de communication 20 est lui-même relié par un bus 22 à une mémoire statique 21 contenant les instructions de fonctionnement du processeur de communication 20, notamment celles nécessaires à la mise en oeuvre de l'invention, et à la mémoire de données 13 précitée.

La communication entre les deux processeurs 10 et 20 se fait donc par l'intermédiaire de la mémoire de données 13. Quand un datagramme arrive sur l'une des interfaces IL2 ou IL3 du point d'accès PA2, le processeur 20 l'inscrit dans la mémoire 13, puis le processeur 10 détermine, à partir de l'adresse de destination de ce datagramme, l'adresse IP du point d'accès distant auquel il doit être transmis, tel que cela a été décrit précédemment. Il en déduit l'adresse X121 de ce point d'accès distant selon le procédé décrit à la figure 3.

Tout détail complémentaire sur l'architecture et le fonctionnement d'un tel équipement peut être trouvé dans l'article intitulé "Nouvelle architecture pour la gamme de commutateurs Compac" de M.P. BELIN, P. COLARD et R. LAURENT, publié dans la revue Commutation & Transmission N°3, 1992.

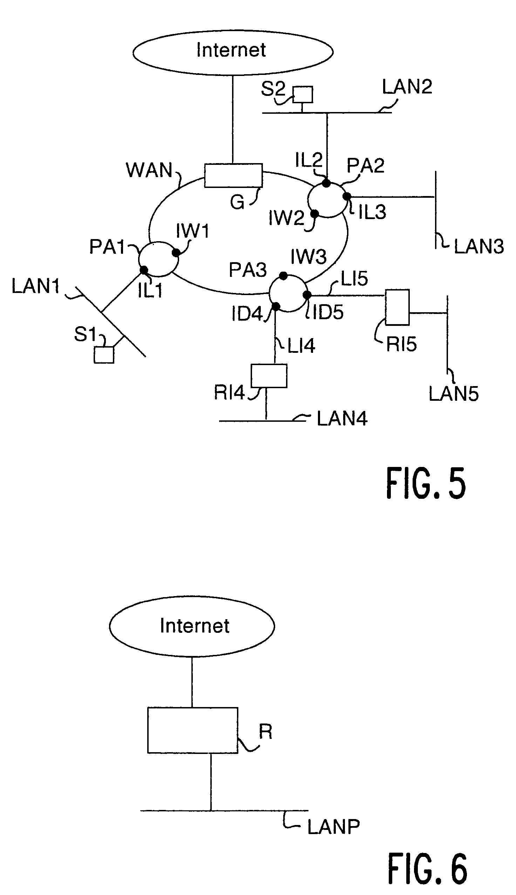

La figure 5 représente un autre mode de réalisation d'un système d'interconnexion de réseaux locaux selon l'invention.

Dans cet exemple le réseau WAN X25 comporte une passerelle G qui est connectée au réseau public Internet. Cette passerelle permet de faire des conversions d'adresses "adresse privée Internet/adresse publique Internet" de telle sorte que pour un numéro public de classe C attribué au réseau privé, 256 stations puissent communiquer vers l'extérieur par l'intermédiaire de la passerelle G. Ainsi, seules les stations qui se verront attribuer un numéro Internet public parallèlement à leur numéro Internet privé défini selon le plan d'adressage décrit ci-dessus, peuvent communiquer vers l'extérieur.

La figure 6 représente le réseau privé décrit sur la figure 5, vu du réseau public Internet, pour une adresse Internet publique de classe C demandée. Le réseau privé apparaît alors comme un routeur R auquel est connecté un réseau local LANP de classe C.

Un tel système d'interconnexion de réseaux locaux présente donc l'avantage supplémentaire de rendre la structure du réseau étendu (éventuellement composée de différents supports de secours) transparente vis-à-vis du réseau public Internet.

Il va de soi que des modifications peuvent être apportées aux modes de réalisation qui viennent d'être décrits notamment par substitution de moyens techniques équivalents sans que l'on sorte pour cela du domaine de la présente invention.

En particulier, l'invention peut être mise en oeuvre sur un système d'interconnexion de réseaux locaux basés sur d'autres protocoles que le protocole Internet, au travers d'un réseau étendu d'un type autre que X25. D'autre part, la relation permettant de passer d'une adresse X121 à une adresse IP pour un point d'accès pourrait être différente de celle choisie dans l'exemple décrit ci-dessus.

## Revendications

1. Système d'interconnexion de réseaux locaux (LAN1, LAN2, LAN3, LAN4, LAN5) au travers d'un réseau étendu (WAN) auquel ils sont connectés par l'intermédiaire d'équipements d'interconnexion (PA1, PA2, PA3), les dits réseaux locaux (LAN1, LAN2, LAN3, LAN4, LAN5) et ledit réseau étendu (WAN) étant respectivement basés sur un premier et un second protocole de couche réseau,
caractérisé en ce qu'il constitue un réseau privé qui utilise un plan d'adressage privé conforme audit premier protocole et tel que les adresses de chaque équipement d'interconnexion (PA1, PA2, PA3) se déduisent directement de celles des réseaux locaux (LAN1, LAN2, LAN3, LAN4, LAN5) qui lui sont connectés.

2. Système d'interconnexion de réseaux locaux selon la revendication 1, caractérisé en ce que, ledit premier protocole étant conforme au protocole Internet, des adresses Internet de classe A ou B (CRa, CSa) sont attribuées à chaque équipement d'interconnexion (PA1, PA2, PA3) à partir des adresses Internet de classe C (CRc, CSc) des réseaux locaux (LAN1, LAN2, LAN3, LAN4, LAN5) qui lui sont connectés, de telle sorte que, toute adresse Internet étant composée d'un champ réseau (CRc, CRa) et d'un champ station (CSc, CSa), le champ station (CSa) d'une adresse d'un équipement d'interconnexion (PA1, PA2, PA3) soit formé à partir du champ réseau (CRc) des adresses des stations du réseau local (LAN1, LAN2, LAN3, LAN4, LAN5) correspondant.

3. Système d'interconnexion de réseaux locaux selon la revendication 2, caractérisé en ce qu'au moins une adresse Internet publique de classe C est attribuée au dit réseau privé de telle sorte qu'au moins 256 de ses stations communiquent vers l'extérieur par l'intermédiaire d'une passerelle (G) faisant partie du réseau étendu (WAN), connectée au réseau public Internet (Internet), et qui réalise les conversions d'adresses Internet "réseau privé/réseau public".

4. Système d'interconnexion de réseaux locaux selon l'une des revendications 1 à 3, caractérisé en ce que, dans le plan d'adressage privé, les adresses sont choisies selon une méthode prédéterminée à partir des adresses des équipements d'interconnexion (PA1, PA2, PA3) sur le réseau étendu (WAN), elles-même conformes au second protocole, de telle sorte que, pour un équipement d'interconnexion (PA1, PA2, PA3), la conversion "adresse dans le plan d'adressage privé/adresse sur le réseau étendu" se fasse automatiquement.

5. Système d'interconnexion de réseaux locaux selon la revendication 4, dans lequel les dits premier et second protocoles sont respectivement conformes au protocole Internet et à la recommandation X121 du CCITT, caractérisé en ce que ladite méthode consiste à extraire un ensemble de digits (IC, NC) de l'adresse X121 d'un équipement d'interconnexion (PA1, PA2, PA3) afin de former le champ station (CSa) des adresses Internet (CRa, CSa) dudit équipement d'interconnexion (PA1, PA2, PA3).

6. Equipement d'interconnexion de réseaux (PA1, PA2, PA3), destiné à être utilisé dans un système d'interconnexion de réseaux locaux selon l'une des revendications 1 à 5, caractérisé en ce qu'il comporte des moyens pour déterminer directement, sans utiliser de tables d'adressage, à partir de l'adresse (CRc, CSc) de la station de destination d'un datagramme celle (CRa, CSa) de l'équipement d'interconnexion distant (PA1, PA2, PA3) auquel le datagramme doit être transmis, cette adresse étant conforme au dit premier protocole.

7. Equipement d'interconnexion de réseaux (PA1, PA2, PA3) selon la revendication 6, destiné à être utilisé dans un système d'interconnexion de réseaux locaux selon l'une des revendications 4 ou 5, caractérisé en ce qu'il met en oeuvre un procédé pour déduire automatiquement l'adresse (DNIC NC AI) de l'équipement d'interconnexion distant (PA1, PA2, PA3) dans le réseau étendu (WAN), qui est conforme au dit second protocole, à partir de son adresse (CRa, CSa) dans le réseau privé, qui est conforme au dit premier protocole.

8. Equipement d'interconnexion (PA1, PA2, PA3) selon la revendication 7, caractérisé en ce que, lorsque les dits premier et second protocoles sont respectivement conformes au protocole Internet et à la recommandation X121 du CCITT, ledit procédé consiste à extraire du champ station de l'adresse Internet de l'équipement d'interconnexion distant (PA1, PA2, PA3) un premier ensemble de bits pour former l'adresse X121 de l'équipement d'interconnexion distant (PA1, PA2, PA3), puis un second ensemble de bits pour établir une connexion de cet équipement d'interconnexion (PA1, PA2, PA3) vers un réseau local soit directement (LAN1, LAN2, LAN3) soit par l'intermédiaire d'un équipement distant (RI4, RI5).

9. Procédé destiné à être mis en oeuvre dans un équipement d'interconnexion (PA1, PA2, PA3) selon l'une des revendications 7 ou 8.
